# EUROPÄISCHE PATENTSCHRIFT

(11) **EP 2 416 978 B1**
(45) Veröffentlichungstag und Bekanntmachung des Hinweises auf die Patenterteilung: **12.09.2012**
(21) Anmeldenummer: 10718905.2
(22) Anmeldetag: 07.04.2010
(51) Int. Cl.: B60K 1/04, B60L 11/18, H02J 7/00

(54) **LADEKABELVERRIEGELUNGSVORRICHTUNG UND VERFAHREN ZUM VERRIEGELN EINES KABELS**
CHARGING CABLE LOCKING DEVICE AND METHOD FOR LOCKING A CABLE
DISPOSITIF DE VERROUILLAGE DE CÂBLE DE CHARGE ET PROCÉDÉ POUR VERROUILLER UN CÂBLE

(30) Priorität: 08.04.2009 DE 102009016504
(43) Veröffentlichungstag der Anmeldung: 15.02.2012
(73) Patentinhaber: RWE AG, 45128 Essen (DE)
(72) Erfinder: GAUL, Armin, 59379 Selm (DE); DIEFENBACH, Ingo, 59425 Unna (DE)
(74) Vertreter: Cohausz & Florack
(86) Internationale Anmeldenummer: PCT/EP2010/054596
(87) Internationale Veröffentlichungsnummer: WO 2010/115927

(56) Entgegenhaltungen:
- DE-A1- 19 642 687
- DE-A1-102007 002 025
- GB-A- 2 438 979
- US-A- 5 202 617

## Beschreibung

Der Gegenstand betrifft eine Ladekabelverriegelungsvorrichtung für Elektrofahrzeuge mit einer fanrzeugseitigen Aufnahme zur Aufnahme eines mit einer Ladestation verbindbaren Ladekabels, und einer an der Aufnahme angeordneten Verriegelungseinrichtung, wobei die Verriegelungseinrichtung zum Verriegeln und Freigeben des Ladekabels mit der Aufnahme gebildet ist.

Eine Vorrichtung bzw. ein Verfahren mit den Merkmalen des Obebegriffs der Ansprüche 1 bzw. 8 ist aus der DE 196 42 687 A1 bekannt.

Die Verbreitung elektrisch betriebener Fahrzeuge wird in naher Zukunft rapide zunehmen. Mit der Verbreitung von Elektrofahrzeugen, die mit einem Elektromotor betrieben werden, muss jedoch sichergestellt werden, dass diese in einfachster Weise mit Energie versorgt werden können. Hierzu muss eine funktionierende Infrastruktur zur Verfügung gestellt werden.

Insbesondere muss die Möglichkeit gegeben werden, in öffentlichen Bereichen Energie für die Elektrofahrzeuge zu beziehen. Bei den bisher verfügbaren Reichweiten von Elektrofahrzeugen zwischen 50 und einigen 100 km ist es notwendig, dass auch außerhalb des häuslichen Umfeldes ein Laden der Fahrzeuge möglich ist. Hierfür müssen in öffentlichen Bereichen Ladestationen zur Verfügung gestellt werden, um eine stete Verfügbarkeit von Energie für Elektrofahrzeuge durch ein Versorguitgsnetz zur Verfügung zu stellen. Diese Verfügbarkeit ist ein entscheidendes Kriterium für die Akzeptanz von Elektrofahrzeugen.

Sind Ladestationen jedoch in öffentlichen Bereichen installiert, muss sichergestellt werden, dass "Stromklau" vermieden wird. Insbesondere muss vermieden werden, dass ein Ladervorgang unbefugt unterbrochen wird. Auch muss sichergestellt werden, dass die zur Verfügung gestellte Energie auch demjenigen zur Verfügung gestellt wird, der hierfür bezahlt.

Aus diesem Grunde lag dem Gegenstand die Aufgabe zugrunde, eine Vorrichtung und ein Verfahren zur Verfügung zu stellen, welches die Sicherheit beim Laden von Elektrofahrzeugen erhöht.

Diese Aufgabe wird gegenständlich durch eine Ladekabelverriegelungsvorrichtung für Elektrofahrzeuge gelöst nach Anspruch 1.

Eine Verriegelungseinrichtung kann eine mechanische Verriegelung des Ladekabels an der Aufnahme sein. Hierbei ist es beispielsweise möglich, dass die Verriegelungseinrichtung mittels elektromechanischer Mittel mit dem Ladekabel derart verbunden wird, dass das Ladekabel fest in der Aufnahme gehalten ist und nicht aus der Aufnahme entfernt werden kann. Beispielsweise können Stifte oder Bolzen in eine Buchse oder einen Stecker des Kabels bewegt werden, wobei die Stifte oder Bolzen derart mit dem Fahrzeug verbunden sind, dass das Nicht mehr aus der Aufnahme entfernt werden kann.

Eine Verschlusseinrichtung kann eine Einrichtung sein, mit dem die Verriegelungseinrichtung aktivierbar ist. Eine Verschlusseinrichtuog kann beispielsweise eine von einem Benutzer aktivierte Einrichtung sein, mit der die Verriegelungseinrichtung verriegelbar und öffenbar ist. Die Verschlusseinrichtung kann beispielsweise ein Fahrzeugschloss sein. Auch kann die Verschlusseinrichtung an eine Zentralverriegelung des Fahrzeugs gekoppelt sein. Die Verschlusseinrichtung kann auch durch die Zentralverriegelung selbst gebildet sein.

Ein Aktivieren der Verschlusseinrichtung kann beispielsweise das Drücken eines Verriegelungsknopfes sein. Auch kann ein Aktivieren der Verschlusseinrichtung ein Verschluss des Fahrzeugs sein. Auch ist es möglich, dass ein Aktivieren der Verschlusseinrichtung darin besteht, dass ein Transponder von dem Fahrzeug entfernt wird, derart, dass die Transpondersignatur nicht mehr ausgelesen werden kann.

Ein Deaktivieren der Verschlusseinrichtung kann beispielsweise dahingehend verstanden werden, dass ein Knopf oder Schalter erneut bestätigt wird. Das Deaktivieren kann beispielsweise auch darin bestehen, dass ein berührungslos auslesbarer Transponder sich der Verschlusseinrichtung nähert, derart, dass der Transponder ausgelesen werden kann. Ein Deaktivieren kann dann dahingehend verstanden werden, dass der Transponder in die Reichweite des Fahrzeugs bewegt wird, derart, dass eine Signatur ausgelesen werden kann. Auch kann ein Deaktivieren dahingehend verstanden werden, dass ein Fahrzeug aufgeschlossen wird.

Beim Aktivieren der Verschlusseinrichtung wird gegenständlich das Ladekabel in der Aufnahme durch die Verriegelungseinrichtung verriegelt. Hierbei wird die Verriegelungseinrichtung in einen geschlossenen Zustand bewegt. Dies kann elektrisch als auch mechanisch erfolgen. Ist die im geschlossenen Zustand, Ist die Verriegelungseinrichtung im geschlossenen Zustand, kann das Ladekabel nicht mehr mechanisch von der Aufnahme entfernt werden.

Beim Desaktivieren der Verschlusseinrichtung wird die Verriegelungseinrichtung in einen geöffneten Zustand bewegt. In diesem Zustand kann das Ladekabel in die Aufnahme gesteckt werden und aus der Aufnahme entfernt werden.

Gemäß eines vorteilhaften Ausführungsbeispiels wird vorgeschlagen, dass die Verschlusseinrichtung eine Zentralverriegelung des Fahrzeugs ist und dass die Verriegelungseinrichtung mit der Zentralverriegelung des Fahrzeugs gekoppelt ist, derart, dass beim Verschließen des Fahrzeugs durch die Zentralverriegelung das Ladekabel mit der Aufnahme verriegelbar ist und dass beim Öffnen des Fahrzeugs durch die Zentralverriegelung das Ladekabel von der Aufnahme freigebbar ist.

Es ist erkannt worden, dass in besonders einfacher, in benutzerfreundlicher Weise, die Verriegelungseinrichtung durch die Zentralverriegelung des Fahrzeugs aktiviert und deaktiviert werden kann. Die Zentralverriegelung wird durch Benutzer von Fahrzeugen regelmäßig dann betätigt, wenn sich der Benutzer von dem Fahrzeug entfernt. Der Benutzer schließt sein Fahrzeug mittels der Zentralverriegelung ab. In diesem Fall ist davon auszugehen, dass der Benutzer des Fahrzeugs nicht mehr den Ladevorgang überwacht. Aus diesem Grunde ist beim Aktivieren der Zentralverriegelung und dem Verschließen des Fahrzeugs davon auszugehen, dass das Ladekabel vor unbefugtem Zugriff geschützt werden muss. Aus diesem Grunde wird beim Aktivieren der Zentralverriegelung gemäß des vorteilhaften Ausführungsbeispiels das Ladekabel mit der Aufnahme verriegelt. Unbefugte können das Ladekabel, nachdem das Fahrzeug abgeschlossen worden ist, nicht mehr von der Aufnahme entfernen.

Kehrt der Benutzer zu seinem Fahrzeug zurück, so schließt er regelmäßig dieses auf. Mit dem Aufschließen des Fahrzeugs signalisiert der Benutzer, dass er seine Fahrt fortsetzen möchte. In diesem Fall muss der Benutzter das Ladekabel von der Aufnahme entfernen können. Aus diesem Grunde wird gemäß des vorteilhaften Ausführungsbeispiels vorgeschlagen, dass beim Öffnen des Fahrzeugs durch die Zentralverriegelung das Ladekabel von der Aufnahme freigebbar ist. Der Benutzer kann das Ladekabel dann ohne weitere Probleme von der Aufnahme entfernen.

Gemäß eines vorteilhaften Ausführungsbeispiels wird vorgeschlagen, dass die Verschlusseinrichtung eine drahtlos aktivierbare Transponderleseeinrichtung ist. Beispielsweise ist es möglich, dass ein Benutzer einen drahtlos auslesbaren Transponder mit sich führt. Dies kann beispielsweise ein RFID-Transponder sein. Entfernt sich der Benutzer von seinem Fahrzeug, kann die Verschlusseinrichtung den Transponder nicht mehr auslesen. Dies kann zur Aktivierung der Verschlusseinrichtung führen. Nähert sich der Benutzer erneut dem Fahrzeug, kann die Transponderleseeinrichtung den Transponder erneut auslesen und die Verschlusseinrichtung kann deaktiviert werden. Gemäß eines anderen Beispiels ist es auch möglich, das der Transponder dazu verwendet wird, aktiv das Ladekabel mit der Aufnahme zu verbinden. Hierzu kann beispielsweise der Benutzer den Transponder in die Nähe der Transponderlesevorrichtung halten, woraufhin die Verschlusseinrichtung aktiviert wird. Hält der Benutzer den Transponder erneut in die Nähe der Transponderleseeinrichtung, kann eine Deaktivierung erfolgen.

Gemäß eines vorteilhaften Ausführungsbeispiels wird vorgeschlagen, dass eine Signalisierungseinrichtung mit der Verriegelungseinrichtung gekoppelt ist, dass die Verriegelungseinrichtung beim Aktivieren der Verschlusseinrichtung ein Aktivierungssignal an die Signalisierungseinrichtung übermittelt, und dass im Anschluß die Signalisierungseinrichtung der Ladestation ein Freigabesignal zur Freigabe des Ladestroms übermittelt.

Es ist erkannt worden, dass der Ladestrom erst dann fließen sollte, wenn das Ladekabel fest in der Aufnahme verankert ist und aus der Aufnahme nicht mehr entfernt werden kann. Aus diesem Grunde ist eine Signalisierungseinrichtung vorgesehen. Die Signalisierungseinrichtung kann eine Einrichtung sein, die ein kodiertes oder unkodiertes Signal über das Ladekabel oder drahtlos oder über ein gesondertes Kabel an die Ladestation übermitteln kann. In der Ladestation ist eine Empfangseinrichtung vorgesehen, die die Signale der Signalisierungseinrichtung empfangen und auswerten kann. Empfängt die Empfangseinrichtung ein Aktivierungssignal der Signalisierungseinrichtung, kann die Empfangseinrichtung in der Ladestation die Freigabe des Ladestroms bewirken. Das bedeutet, dass erst nachdem die Verriegelungseinrichtung die Verschlusseinrichtung aktiviert hat, ein Freigabesignal an die Ladestation übermittelt wird und erst nachdem das Ladekabel in der Aufnahme gesichert ist, der Ladestrom freigegeben wird. Hierdurch wird verhindert, dass ein Ladestrom fließt, obwohl das Ladekabel nicht in der Aufnahme gesichert ist.

Erfindungsgemäß ist eine Signalisierungseinrichtung mit der Verriegelungseinrichtung gekoppelt, wobei die Verriegelungseinrichtung beim Aktivieren der Verschlusseinrichtung ein Aktivierungssignal an die Signalisierungseinrichtung übermittelt und dass im Anschluss die Signalisierungseinrichtung in der Ladestation ein Verriegelungssignal zur Verriegelung des Ladekabels an der Ladestation übermittelt. Neben der Freigabe des Ladestroms ist auch die Verriegelung des Ladekabels an der Ladestation wichtig, da ansonsten das Ladekabel von der Ladestation entfernt werden könnte und ein unbefugter Benutzer die Ladestation zum Laden seines eigenen Fahrzeugs nutzen könnte. Aus diesem Grunde muss das Ladekabel auch in der Ladestation verriegelt werden. Das Verriegelungssignal kann beispielsweise zusammen mit dem Freigabesignal an die Ladestation übermittelt werden. Auch kann das Verriegelungssignal und das Freigabesignal identisch sein. Darüber hinaus kann das Verriegelungssignal signiert und kodiert sein, um sicherzustellen, dass das Verriegelungssignal von einer autorisierten Signalisierungseinrirchtung eines Fahrzeugs stammt. Empfängt die Empfangseinrichtung in der Ladestation von der Signalisierungseinrichtung das Verriegelungssignal, so bewirkt die Empfangseinrichtung in der Ladestation eine Verriegelung des Ladekabels an der Ladestation. Der Verriegelungsmechanismus kann dabei mechanisch und/oder elektrisch erfolgen.

Wenn der Benutzer seine Autofahrt fortsetzen möchte, muss er das Ladekabel sowohl vom Fahrzeug als auch von der Ladestation entfernen. Wird das Kabel jedoch von dem Fahrzeug entfernt, ist aus Sicherheitsgründen auch der Ladestrom zu deaktivieren. Aus diesem Grunde wird gemäß eines vorteilhaften Ausführungsbeispiels vorgeschlagen, dass eine Signalisierungseinrichtung mit der Verriegelungseinrichtung gekoppelt ist, dass die Verriegelungseinrichtung beim Desaktivieren der Verschlusseinrichtung ein Deaktivierungssignal an die Signalisierungseinrichtung übermittelt und dass im Anschluss die Signalisierungseinrichtung der Ladestation ein Sperrsignal zur Sperrung des Ladestroms übermittelt. Somit wird bei einer Deaktivierung der Verschlusseinrichtung, also dem Freigeben des Ladekabels von dem Anschluss, ein Sperrsignal an die Ladestation übermittelt. In der Ladestation kann eine Empfangseinrichtung das Sperrsignal empfangen und eine Sperrung des Ladestroms in der Ladestation bewirken. Durch die Sperrung des Ladestrom bei der Freigabe des Ladekabels von dem Anschluss wird verhindert, dass durch das Ladekabel beim Trennen von dem Anschluss ein Lichtbogen erzeugt wird. Auch wird verhindert, dass das Ladekabel eventuell durch vorstehende Kontakte einen Kurzschluss verursachen kann.

Beim Deaktivieren der Verschlusseinrichtung kann das Ladekabel von dem Anschluss entfernt werden. Um das Ladekabel auch von der Ladestation entfernen zu können, muss auch die Ladestation das Ladekabel entriegelt. Aus diesem Grunde wird gemäß eines vorteilhaften Ausführungsbeispiels vorgeschlagen, dass eine Signalisierungseinrichtung mit der Verriegelungseinrichtung gekoppelt ist, dass die Verriegelungseinrichtung beim Deaktivieren der Verschlusseinrichtung ein Deaktivierungssignal an die Signalisierungseinrichtung übermittelt und dass im Anschluss die Signalisierungseinrichtung der Ladestation ein Entriegelungssignal zur Entriegelung des Ladekabels von der Ladestation übermittelt. Das Entriegelungssignal kann unmittelbar vor oder nach dem Sperrsignal übertragen werden. Auch kann das Verriegelungssignal identisch mit dem Sperrsignal sein. Das Entriegelungssignal wird von einer Empfangseinrichtung in der Ladestation empfangen. Nach Empfangen des Entriegelungssignals wird in der Ladestation das Ladekabel entriegelt, so dass dieses von der Ladestation entfernt werden kann.

Gemäß eines vorteilhaften Ausführungsbeispiels ist die Aufnahme ein Stecker oder eine Buchse. Entsprechend hierzu weist das Ladekabel einen korrespondierenden Stecker oder eine Buchse auf.

Ein weiterer Gegenstand ist ein Verfahren zum Verriegeln eines Ladekabels an Elektrofahrzeugen nach Anspruch 8.Das Verfahren ist dadurch gekennzeichnet, dass die Verriegelungseinrichtung mit einer Verschlusseinrichtung des Fahrzeugs gekoppelt ist, derart, dass beim Aktivieren der Verschlusseinrichtung das Ladekabel mit der Aufnahme verriegelt wird und dass beim Deaktivieren der Verschlusseinrichtung das Ladekabel von der Aufnahme freigegeben wird.

Nachfolgend wird der Gegenstand anhand einer Ausführungsbeispiele zeigenden Zeichnung näher erläutert. In der Zeichnung zeigen:
- Fig. 1a: einen schematischen Aufbau einer Aufnahme für ein Ladekabel;
- Fig. 1b: einen schematischen Aufbau einer Aufnahme mit einem eingesteckten und verriegelten Ladekabel;
- Fig. 2: ein schematischer Aufbau einer Ladestation;
- Fig. 3: ein schematischer Aurbau eines Ladesystems mit einem Fahrzeug und einer Ladesäule;

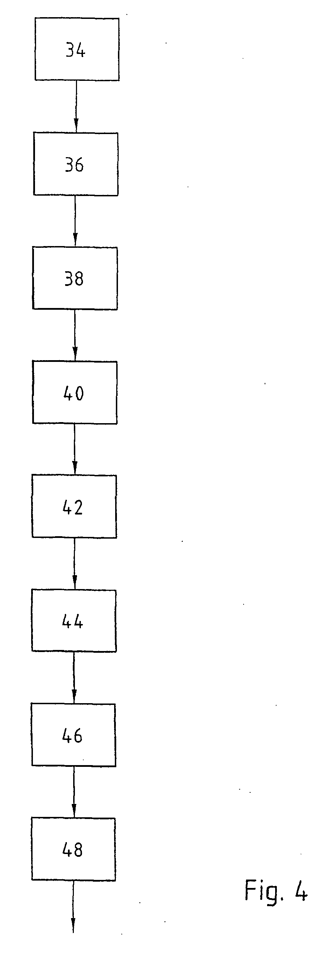

- Fig. 4: ein Ablaufdiagramm eines beispielhaften Verfahrens.

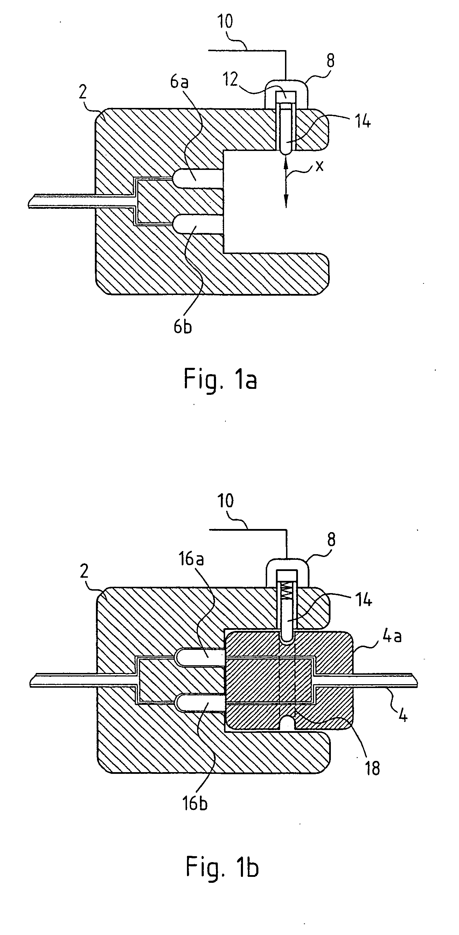

Fig. 1a zeigt schematisch eine Aufnahme 2 für ein nicht dargestellten Ladekabel 4. In der Aufnahme 2, welche als Buchse mit zwei Kontakten 6a, 6b gebildet ist, ist eine Verriegelungseinrichtung 8 vorgesehen. Die Verriegelungseinrichtung 8 ist über eine Datenleitung 10 mit einer Verschlusseinrichtung des Fahrzeugs, beispielsweise eine Zentralverriegelung verbunden. In der Verriegelungseinrichtung 8 ist ein elektrischer Antrieb 12 für einen Bolzen 14 vorgesehen. Mittels des elektrischen Antriebs 12 kann der Bolzen 14 in der Richtung x hin und her bewegt werden. Der elektrische Antrieb 12 wird abhängig von den Signalen der Datenleitung 10 zum Bewegen des Bolzens 14 betrieben.

Die Aufnahme 2 ist ebenfalls in der Fig. 1b dargestellt. In der Fig. 1b ist in der Aufnahme 2 das Ladekabel 4 mit einem Stecker 4a eingesteckt. Wie zu erkennen ist, sind die Kontakte 6 der Aufnahme 2 mit korrespondierenden Kontakten 16 des Steckers 4a des Ladekabels 4 elektrisch verbunden.

In der in Fig. 1b dargestellten Position ist die Verriegelungseinrichtung 8 mittels der Datenleitung 10 aktiviert worden, derart, dass der elektrische Antrieb 12 den Bolzen 14 in eine Nut 18 des Mutter-Steckers 4a bewegt hat. Mittels des Bolzens 14, der in der Nut 18 verrastet, wird das Ladekabel 4 in der Aufnahme 2 verriegelt. Durch ein erneutes Signal auf der Datenleitung 10 kann der elektrische Antrieb 12 der Verriegelungseinrichtung 8 derart aktiviert werden, dass der Bolzen 14 aus der Nut 18 herausbewegt, wird, so dass das Ladekabel 4 freigegeben wird.

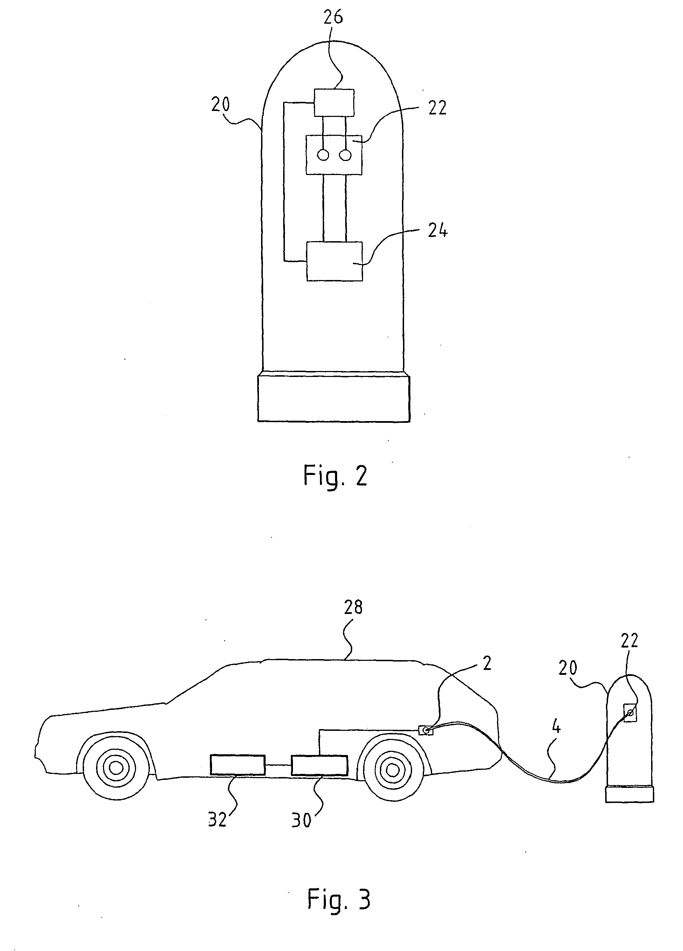

Fig. 2 zeigt eine Ladestation 20 mit einer Aufnahme 22 für ein nicht dargestelltes Ladekabel 4. Die Aufnahme 22 kann entsprechend der Aufnahme 2 gebildet sein und ebenfalls eine entsprechende Verriegelungseinrichtung 8 aufweisen. Darüber hinaus verfügt die Ladestation 22 zum Aufladen des Fahrzeugs über Lademittel 24, die eine elektrische Energie an die Kontakte der Aufnahme 22 führen, die mittels des Ladekabels abgegriffen werden können. Darüber hinaus verfügt die Ladestation 20 über eine Empfangseinrichtung 26. Mittels der Empfangseinrichtung 26 können Signale, die an dein Kontakten der Aufnahme 22 anliegen, empfangen werden. Diese Signale können beispielsweise ein Freigabesignal, ein Verriegelungssignal, ein Sperrsignal und ein Entriegelungssignal sein. Das Freigabesignal und das Entriegelungssignal können identisch sein. Das Sperrsignal und das Verriegelungssignal können ebenfalls identisch sein. Beim Empfangen des Freigabesignals durch die Empfangseinrichtung 26 kann das Lademittel 24 aktiviert werden. Beim Empfang des Verriegelungssignals kann die Aufnahme 22 bzw. die dort vorgesehene Verriegelungseinrichtung aktiviert werden, derart, dass ein eingestecktes Ladekabel in der Aufnahme 22 fixiert wird.

Beim Empfang eines Sperrsignals durch die Empfangseinrichtung 26 können die Lademittel 24 deaktiviert werden, so dass der Anschluss 22 stromlos geschaltet wird. Beim Empfang des Entriegelungssignals durch die Empfangseinrichtung 26 kann diese die Verriegelungseinrichtung der Aufnahme 22 ansteuern, derart, dass ein eingestecktes Ladekabel freigegeben wird.

Fig. 3 zeigt ein Fahrzeug 28 mit einer Aufnahme 2 für ein Ladekabel 4 sowie eine Ladestation 20 mit einer Aufnahme 22. Das Fahrzeug 28 weist darüber hinaus eine Signalisierungseinrichtung 30 und eine Verschlusseinrichtung 32 auf. Die Signalisierungseinrichtung 30 kann mit der Verschlusseinrichtung 32 gekoppelt sein. Die Signalisierungseinrichtung 30 kann über eine Datenleitung Informationen an die Kontakte 6 der Aufnahme 2 übermitteln. Auch kann die Signalisierungseinrichtung 30 über eine Datenleitung 10 mit der Verriegelungseinrichtung 8 gekoppelt sein.

Die Verschlusseinrichtung 32 kann eine Zentralverriegelung des Fahrzeugs 28 sein. Die Verschlusseinrichtung 32 kann beispielsweise auch eine Transponderlesevorrichtung sein. In dem in Fig. 3 dargestellten Fall ist das Ladekabel 4 in die Aufnahme 2 und die Aufnahme 22 eingesteckt. Der Ablauf des gegenständlichen Verfahrens ist nachfolgend in Verbindung mit Fig. 3 schematisch dargestellt.

In einem ersten Schritt 34 kann der Fahrer des Fahrzeugs 28 beispielsweise mittels seines Schlüssels ein Verschlusssignal an die Verschlusseinrichtung 32 übermitteln. Mittels des Verschlusssignals werden die Türen des Fahrzeugs 28 abgeschlossen. Parallel dazu übermittelt die Verschlusseinrichtung 32 an die Signalisierungseinrichtung 30 ein Aktivierungssignal.

Die Signalisierungseinrichtung 30 nutzt dieses Aktivierungssignal zunächst dazu, die Verriegelungseinrichtung in einem Schritt 36 anzusteuern. Im Schritt 36 verriegelt die Verriegelungseinrichtung 8 das Ladekabel 4 in der Aufnahme 2 mittels des Bolzens 14. Darüber hinaus übermittelt die Signalisierungseinrichtung 30 in einem Schritt 38 ein Verriegelungssignal über das Ladekabel 4 an die Ladestation 20. In der Ladestation 20 wird das Verriegelungssignal durch die Empfangseinrichtung 26 empfangen und die Empfangseinrichtung 26 bewirkt, dass das Ladekabel 4 in der Aufnahme 22 der Ladestation 20 verriegelt wird.

Daraufhin übermittelt in einem Schritt 40 die Signalisierungseinrichtung über das Ladekabel 4 ein Freigabesignal an die Ladestation 20. Das Freigabesignal wird in der Ladestation 20 mittels der Empfangseinrichtung 26 empfangen. Die Empfangseinrichtung 26 aktiviert die Lademittel 24, woraufhin ein Ladestrom freigegeben wird. Über das Ladekabel 4 fließt somit ein Ladestrom zu dem Fahrzeug 28 zum Aufladen einer Batterie des Fahrzeugs 28.

Kommt der Fahrer des Fahrzeugs 28 zurück zu seinem Fahrzeug, kann dieser sein Fahrzeugs mittels eines Schlüssels wieder aufschließen, die Verschlusseinrichtung 32 empfängt in einem Schritt 42 das entsprechende Deaktivierungssignal und öffnet die Türen des Fahrzeugs 28. In einem Schritt 44 übermittelt daraufhin die Signalisierungseinrichtung 30 ein Sperrsignal über das Ladekabel 4 an die Ladestation 20. In der Ladestation 20 empfängt die Empfangseinrichtung 26 das Sperrsignal und führt eine Deaktivierung der Lademittel 24 durch.

Anschließend übermittelt die Signalisierungseinrichtung 30 in einem Schritt 46 über das Ladekabel 4 ein Entriegelungssignal an die Ladestation 20. Die Empfangseinrichtung 26 empfängt das Entriegelungssignal und führt eine Entriegelung des Ladekabels 4 von der Aufnahme 22 durch.

Abschließend wird in einem Schritt 48 die Verriegelungseinrichtung 8 derart angesteuert, dass das Ladekabel 4 in der Aufnahme 2 entriegelt wird. Hierzu wird der Bolzen 14 aus der Nut 18 mittels des elektrischen Antriebs 12 herausbewegt.

Hiernach kann der Benutzer das Ladekabel 4 ohne Weiteres aus den Aufnahme 2 und 22 entfernen und der Ladevorgang ist abgeschlossen.

Mittels des beschriebenen Verfahrens ist es möglich, ein sicheres Laden auch in Abwesenheit eines Benutzers eines Fahrzeugs zur Verfügung zu stellen.

## Patentansprüche

1. Ladekabelverriegelungsvorrichtung für Elektrofahrzeuge mit
- einer fahrzeugseitigen Aufnahme (2) zur Aufnahme eines mit einer Ladestation verbindbaren Ladekabels (4), und
- einer an der Aufnahme (2) angeordneten Verriegelungseinrichtung (8),
- wobei die Verriegelungseinrichtung (8) zum Verriegeln und Freigeben des Ladekabels (4) mit der Aufnahme (2) gebildet ist,
wobei
- die Verriegelungseinrichtung (8) mit einer Verschlusseinrichtung (32) des Fahrzeugs (28) gekoppelt ist, derart, dass beim Aktivieren der Verschlusseinrichtung (32) das Ladekabel (4) mit der Aufnahme verriegelbar ist und dass beim Deaktivieren der Verschlusseinrichtung (32) das Ladekabel (4) von der Aufnahme (2) freigebbar ist, **dadurch gekennzeichnet,**
- **dass** eine Signalisierungseinrichtung (30) mit der Verriegelungseinrichtung (8) gekoppelt ist, dass die Verriegelungseinrichtung (8) beim Aktivieren der Verschlusseinrichtung (32) ein Aktivierungssignal an die Signalisierungseinrichtung (30) übermittelt und dass im Anschluss die Signalisierungseinrichtung (30) der Ladestation (20) ein Verriegelungssignal zur Verriegelung des Ladekabels (4) an der Ladestation (20) übermittelt.

2. Ladekabelverriegelungsvorrichtung nach Anspruch 1, **dadurch gekennzeichnet, dass** die Verschlusseinrichtung (32) eine Zentralverriegelung des Fahrzeugs (28) ist und dass die Verriegelungseinrichtung (8) mit der Zentralverriegelung des Fahrzeugs gekoppelt ist, derart, dass beim Verschließen des Fahrzeugs durch die Zentralverriegelung das Ladekabel (4) mit der Aufnahme (2) verriegelbar ist und dass beim Öffnen des Fahrzeugs durch die Zentralverriegelung das Ladekabel (4) von der Aufnahme (2) freigebbar ist.

3. Ladekabelverriegelungsvorrichtung nach Anspruch 1, **dadurch gekennzeichnet, dass** die Verschlusseinrichtung (32) eine drahtlos aktivierbare Transponderleseeinrichtung ist.

4. Ladekabelverriegelungsvorrichtung nach Anspruch 1, **dadurch gekennzeichnet, dass** eine Signalisierungseinrichtung (30) mit der Verriegelungseinrichtung (8) gekoppelt ist, dass die Verriegelungseinrichtung (8) beim Aktivieren der Verschlusseinrichtung (32) ein Aktivierungssignal an die Signalisierungseinrichtung (30) übermittelt und dass im Anschluss die Signalisierungseinrichtung (30) der Ladestation (20) ein Freigabesignal zur Freigabe des Ladestroms übermittelt.

5. Ladekabelverriegelungsvorrichtung nach Anspruch 1, **dadurch gekennzeichnet, dass** eine Signalisierungseinrichtung (32) mit der Verriegelungseinrichtung (8) gekoppelt ist, dass die Verriegelungseinrichtung (8) beim Deaktivieren der Verschlusseinrichtung ein Deaktivierungssignal an die Signalisierungseinrichtung (32) übermittelt und dass im Anschluss die Signalisierungseinrichtung (32) der Ladestation (20) ein Sperrsignal zur Sperrung des Ladestroms übermittelt.

6. Ladekabelverriegelungsvorrichtung nach Anspruch 1, **dadurch gekennzeichnet, dass** eine Signalisierungseinrichtung (32) mit der Verriegelungseinrichtung (8) gekoppelt ist, dass die Verriegelungseinrichtung (8) beim Deaktivieren der Verschlusseinrichtung (32) ein Deaktivierungssignal an die Signalisierungseinrichtung (30) übermittelt und dass im Anschluss die Signalisierungseinrichtung (30) der Ladestation (20) ein Entriegelungssignal zur Entriegelung des Ladekabels (4) von der Ladestation (20) übermittelt.

7. Ladekabelverriegelungsvorrichtung nach Anspruch 1, **dadurch gekennzeichnet, dass** die Aufnahme (2) ein Stecker (4) oder eine Buchse ist.

8. Verfahren zum Verriegeln eines Ladekabels an Elektrofahrzeugen bei dem
- ein Ladekabel mit einer fahrzeugseitigen Aufnahme verbunden wird, und
- das Ladekabel mittels einer fahrzeugseitigen, an der Aufnahme angeordneten Verriegelungseinrichtung mit der Aufnahme verriegelt und freigegeben wird, wobei
- die verriegelungseinrichtung mit einer Verschlusseinrichtung des Fahrzeugs gekoppelt ist, derart, dass beim Aktivieren der Verschlusseinrichtung das Ladekabel mit der Aufnahme verriegelt wird und dass beim Deaktivieren der Verschlusseinrichtung das Ladekabel von der Aufnahme freigegeben wird, **dadurch gekennzeichnet**
- **dass** eine Signalisierungseinrichtung (30) mit der Verriegelungseinrichtung (8) gekoppelt ist, derart, dass beim Aktivieren der Verschlusseinrichtung (32) ein Aktivierungssignal von der Verriegelungseinrichtung (8) an die Signalisierungseinrichtung (30) übermittelt wird und dass im Anschluss von der Signalisierungseinrichtung (30) an die Ladestation (20) ein Verriegelungssignal zur Verriegelung des Ladekabels (4) an der Ladestation (20) übermittelt wird.

## Claims

1. Charge cable locking device for electric vehicles with:
- a vehicle-side receiver (2) to receive a charge cable (4) which can be connected to a charging station, and
- a locking device (8) arranged on the receiver (2),
- wherein the locking device (8) is formed to lock and release the charge cable (4) with the receiver (2),
- wherein the locking device (8) is coupled with a closing device (32) of the vehicle (28) such that on activation of the closing device (32), the charge cable (4) can be locked with the receiver, and that on deactivation of the closing device (32), the charge cable (4) can be released from the receiver (2), **characterised in**
- **that** a signalling device (30) is coupled with the locking device (8), that the locking device (8) on activation of the closing device (32) transmits an activation signal to the signalling device (30), and that subsequently the signalling device (30) transmits a locking signal to the charging station (20) to lock the charge cable (4) to the charging station (20).

2. Charge cable locking device according to claim 1, **characterised in that** the closing device (32) is a central locking system of the vehicle (28) and that the locking device (8) is coupled with the central locking system of the vehicle in such a way that on closure of the vehicle using the central locking system, the charge cable (4) can be locked with the receiver (2), and that on opening of the vehicle using the central locking system, the charge cable (4) can be released from the receiver (2).

3. Charge cable locking device according to claim 1, **characterised in that** the closing device (32) is a wirelessly activatable transponder read device.

4. Charge cable locking device according to claim 1, **characterised in that** a signalling device (30) is coupled with the locking device (8), that the locking device (8), on activation of the closing device (32), transmits an activation signal to the signalling device (30) and that subsequently the signalling device (30) transmits a release signal to the charging station (20) to release the charging current.

5. Charge cable locking device according to claim 1, **characterised in that** a signalling device (32) is coupled with the locking device (8), that the locking device (8) on deactivation of the closing device transmits a deactivation signal to the signalling device (32), and that subsequently the signalling device (32) transmits a blocking signal to the charging station (20) to block the charge current.

6. Charge cable locking device according to claim 1, **characterised in that** a signalling device (32) is coupled with the locking device (8), that the locking device (8), on deactivation of the closing device (32), transmits a deactivation signal to the signalling device (30) and that subsequently the signalling device (30) transmits an unlocking signal to the charging station (20) to unlock the charge cable (4) from the charging station (20).

7. Charge cable locking device according to claim 1, **characterised in that** the receiver (2) is a plug (4) or a socket.

8. Method for locking a charge cable to electric vehicles, wherein
- a charge cable is connected with a vehicle-side receiver, and
- the charge cable is locked with and released from the receiver by means of a vehicle-side locking device arranged on the receiver, wherein
- the locking device is coupled with a closing device of the vehicle in such a way that on activation of the closing device, the charge cable is locked with the receiver, and that on deactivation of the closing device, the charge cable is released from the receiver, **characterised in**
- **that** a signalling device (30) is coupled with the locking device (8) in such a way that on activation of the closing device (32), an activation signal is transmitted by the locking device (8) to the signalling device (30) and that subsequently the signalling device (30) transmits a locking signal to the charging station (20) to lock the charge cable (4) to the charge station (20).

## Revendications

1. Dispositif de verrouillage de câbles de charge pour véhicules électriques, qui comprend :
- un réceptacle (2) côté véhicule pour la réception d'un câble de charge (4), qui peut être raccordé à un poste de charge, et
- un système de verrouillage (8), qui équipe le réceptacle (2),
- sachant que le système de verrouillage (8) est conçu pour le verrouillage et le déverrouillage du câble de charge (4) par rapport au réceptacle (2),
- le système de verrouillage (8) étant couplé avec un système de fermeture (32) du véhicule (28), de sorte que, lors de l'activation dudit système de fermeture (32), le câble de charge (4) puisse être verrouillé au réceptacle et que, lors de la désactivation du système de fermeture (32), le câble de charge (4) puisse être libéré du réceptacle (2),
**caractérisé en ce que**
- un système de signalisation (30) est couplé avec le système de verrouillage (8), que le système de verrouillage (8), lors de l'activation du système de fermeture (32), transmet un signal d'activation au système de signalisation (30) et que le système de signalisation (30) transmet ensuite au poste de charge (20) un signal de verrouillage pour le verrouillage du câble de charge (4) au poste de charge (20).

2. Dispositif de verrouillage de câble de charge selon la revendication 1, **caractérisé en ce que** le système de fermeture (32) est un verrouillage central du véhicule (28) et que le système de verrouillage (8) est couplé avec ledit verrouillage central de sorte que. lors de la fermeture du véhicule au moyen dudit verrouillage central le câble de charge (4) puisse être verrouillé avec le réceptacle (2) et que, lors de l'ouverture du véhicule au moyen du verrouillage central le câble de charge (4) soit libéré du réceptacle (2).

3. Dispositif de verrouillage de câble de charge selon la revendication 1, **caractérisé en ce que** le système de fermeture (32) est un système de lecture par transpondeur pouvant être activé sans fils.

4. Dispositif de verrouillage de câble de charge selon la revendication 1, **caractérisé en ce qu'**un système de signalisation (30) est couplé avec le système de verrouillage (8), que le système de verrouillage (8), lors de l'activation du système de fermeture (32), transmet un signal d'activation au système de signalisation (30) et que le système de signalisation (30) transmet ensuite au poste de charge (20) un signal de libération pour autoriser du courant de charge.

5. Dispositif de verrouillage de câble de charge selon la revendication 1, **caractérisé en ce qu'**un système de signalisation (32) est couplé avec le système de verrouillage (8), que le système de verrouillage (8), lors de la désactivation du système de fermeture, transmet un signal de désactivation au système de signalisation (32) et que le système de signalisation (32) transmet ensuite au poste de charge (20) un signal de coupure pour couper le courant de charge.

6. Dispositif de verrouillage de câble de charge selon la revendication 1, **caractérisé en ce qu'**un système de signalisation (32) est couplé avec le système de verrouillage (8), que le système de verrouillage (8), lors de la désactivation du système de fermeture (32), transmet un signal de désactivation au système de signalisation (30) et que le système de signalisation (30) transmet ensuite au poste de charge (20) un signal de déverrouillage pour déverrouiller le câble de charge (4) du poste de charge (20).

7. Dispositif de verrouillage de câble de charge selon la revendication 1, **caractérisé en ce que** le réceptacle (2) est une fiche mâle (4) ou une fiche femelle.

8. Procédé pour verrouiller un câble de charge d'un véhicule électrique, dans lequel
- un câble de charge est raccordé à un réceptacle côté véhicule, et
- le câble de charge est verrouillé et déverrouillé par rapport au réceptacle au moyen d'un système de verrouillage, qui équipe le réceptacle, sachant que
- le système de verrouillage est couplé avec un système de fermeture du véhicule de sorte que, lors de l'activation du système de fermeture, le câble de charge soit verrouillé avec le réceptacle et que, lors de la désactivation du dispositif de fermeture, le câble de charge soit libéré du réceptacle,
**caractérisé en ce que**
un système de signalisation (30) est couplé avec le système de verrouillage (8) de sorte que, lors de l'activation du système de fermeture (32), un signal d'activation soit transmis du système de verrouillage (8) au système de signalisation (30) et qu'un signal de verrouillage soit ensuite transmis du système de signalisation (30) au poste de charge (20) pour le verrouillage du câble de charge (4) au poste de charge (20).
